# EUROPÄISCHE PATENTANMELDUNG

(11) **EP 2 786 834 A1**
(43) Veröffentlichungstag der Anmeldung: **08.10.2014**
(21) Anmeldenummer: 13162129.4
(22) Anmeldetag: 03.04.2013
(51) Int. Cl.: B23K 26/14

(54) **Düse für das Laser-Pulver-Auftragsschweißen**

(71) Anmelder: Siemens Aktiengesellschaft, 80333 München (DE)
(72) Erfinder: Arjakine, Nikolai, 10555 Berlin (DE); Burbaum, Bernd, 14612 Falkensee (DE); Kohlhoff, Eike, 10627 Berlin (DE); Melzer-Jokisch, Torsten, 15366 Neuenhagen bei Berlin (DE); Panek, Lukasz, 10439 Berlin (DE); Piegert, Sebastian, 10777 Berlin (DE); Starke, Christoph, 10557 Berlin (DE)

(57) **Zusammenfassung**

Die Erfindung betrifft eine Düse für das Laser-Pulver-Auftragsschweißen, umfassend einen hülsenförmigen Düsenkörper (1), in dem eine axiale Durchgangsöffnung (4) für einen Bearbeitungslaserstrahl mit einer Lasereintrittsöffnung (5) an ihrer Hinterseite und einer Laseraustrittsöffnung (6) an ihrer Vorderseite ausgebildet ist, wobei sich die Durchgangsöffnung (4) insbesondere in Richtung der Laseraustrittsöffnung (6) verjüngt, und einen die Durchgangsöffnung (4) zumindest über einen Teil ihrer axialen Länge umgebenden und sich koaxial zu dieser erstreckenden ringförmigen Pulverkanal (7) für die Zufuhr pulverförmigen Materials in einen Bearbeitungsbereich vor der Laseraustrittsöffnung (6), der wenigstens eine Materialeintrittsöffnung (12) in seiner radial äußeren Wandung (8) und eine durch die offene vordere Stirnseite des Pulverkanals (7) definierte Materialaustrittsöffnung (13) aufweist, und sich nach vorne hin verjüngt, wobei der Pulverkanal (7) derart ausgebildet ist, dass der zwischen der radial äußeren Wandung (8) des Pulverkanals (7) und der Achse des Pulverkanals (7) eingeschlossene Winkel zumindest in dem sich von der wenigstens einen Materialeintrittsöffnung (12) bis zu der Materialaustrittsöffnung (13) erstreckenden Bereich konstant ist oder in Richtung der Materialaustrittsöffnung (6) abnimmt.

## Beschreibung

Die Erfindung betrifft eine Düse für das Laser-Pulver-Auftragsschweißen, umfassend einen hülsenförmigen Düsenkörper, in dem eine axiale Durchgangsöffnung für einen Bearbeitungslaserstrahl mit einer Lasereintrittsöffnung an ihrer Hinterseite und einer Laseraustrittsöffnung an ihrer Vorderseite ausgebildet ist, wobei sich die Durchgangsöffnung insbesondere in Richtung der Laseraustrittsöffnung verjüngt, und einen die Durchgangsöffnung zumindest über einen Teil ihrer axialen Länge umgebenden und sich koaxial zu dieser erstreckenden ringförmigen Pulverkanal für die Zufuhr pulverförmigen Materials in einen Bearbeitungsbereich vor der Laseraustrittsöffnung, der wenigstens eine Materialeintrittsöffnung in seiner radial äußeren Wandung und eine durch die offene vordere Stirnseite des Pulverkanals definierte Materialaustrittsöffnung aufweist, und sich nach vorne hin verjüngt.

Das Laser-Pulver-Auftragsschweiß-Verfahren wird im Allgemeinen zur Beschichtung von Werkstücken angewandt. Dabei dient ein auf ein zu bearbeitendes Werkstück gerichteter Laserstrahl als Wärmequelle, um ein pulverförmiges Material auf die Oberfläche des Werkstücks aufzuschweißen. Um das Material in die Wechselwirkungszone von der Laserstrahlung und dem Grundwerkstoff des zu bearbeitenden Werkstücks zu fördern, kommen im Allgemeinen koaxiale Düsen zum Einsatz.

Eine derartige koaxiale Düse ist beispielsweise aus der DE 693 00 757 T2 bekannt. Diese umfasst einen im Wesentlichen zylinderförmigen Düsenkörper, in welchem zentral eine sich zur Vorderseite des Düsenkörpers konusförmig verjüngende Durchgangsöffnung für den auf das zu bearbeitende Werkstück zu richtenden Bearbeitungslaserstrahl vorgesehen ist. Die Durchgangsöffnung definiert an der Rückseite eine Lasereintrittsöffnung und an der Vorderseite eine Laseraustrittsöffnung. Die Laseraustrittsöffnung weist aufgrund der sich verjüngenden Geometrie der Durchgangsöffnung einen geringeren Durchmesser auf als die Lasereintrittsöffnung an der Rückseite.

Für die Zufuhr pulverförmigen Materials in einen Bearbeitungsbereich vor der Laseraustrittsöffnung, d.h. in die Wechselwirkungszone, umfasst die Düse einen die Durchgangsöffnung umgebenden und sich koaxial zu dieser erstreckenden Pulverkanal. Dieser verjüngt sich von der Lasereintritts- zu der Laseraustrittsöffnung hin. Der Pulverkanal umfasst in seinem hinteren Endbereich eine Einspritzkammer, in welche das pulverförmige Material zusammen mit einem Förderfluid, insbesondere einem Schutzgas wie etwa Helium oder Argon, eingebracht wird. Hierfür sind tangentiale und radiale Zuführleitungen vorgesehen, die sich von außen durch den Düsenkörper erstrecken und in die Einspritzkammer münden. An die Einspritzkammer schließt sich nach vorne ein Pulverkanalabschnitt an, dessen Breite gegenüber der Breite der Einspritzkammer deutlich reduziert ist. Das pulverförmige Material durchströmt die Einspritzkammer sowie den sich daran anschließenden Pulverkanalabschnitt geringerer Breite und tritt über die Materialaustrittsöffnung, welche durch die offen ausgebildete vordere Stirnseite des Pulverkanals gebildet wird aus diesem aus.

Aufgrund der sich verjüngenden Geometrie des Pulverkanals wird das pulverförmige Material koaxial zu dem Bearbeitungslaserstrahl auf einen Punkt, bzw. einen Bereich unterhalb der Laseraustrittsöffnung geführt. Dieser Punkt bzw. Bereich wird auch als Materialfokus bezeichnet. Das in den Materialfokus strömende pulverförmige Material wird mittels des Bearbeitungslaserstrahles, welcher sich simultan durch die Durchgangsöffnung ausbreitet und auf die Werkstückoberfläche gerichtet ist, in dem Bearbeitungsbereich auf das Werkstück aufgeschweißt.

Derartige Düsen haben sich bei der Anwendung des Laser-Pulver-Auftragsschweißens prinzipiell bewährt. Es wird jedoch als nachteilig erachtet, dass es unter Verwendung dieser zu Fehlfunktionen aufgrund von Verstopfungen des Pulverkanals mit dem pulverförmigen Material kommen kann.

Die Gefahr von Verstopfungen besteht bei den bekannten Düsen vor allem dann, wenn pulverförmige Materialien mit einer vergleichsweise kleinen Kornfraktion im Bereich von einigen bis einigen zehn, insbesondere 5 bis 20 Mikrometern zum Einsatz kommen. Das pulverförmige Material wird daher gemäß dem Stand der Technik gesiebt, damit möglichst keine Kornfraktionen dieser Größenordnung in dem Material enthalten sind und die Gefahr von Verstopfungen reduziert ist. Das Sieben des pulverförmigen Materials stellt einen zusätzlichen, aufwendigen Arbeitsschritt dar.

Insbesondere für Verwendung im Rahmen des sogenannten Micro-Cladding-Verfahrens ist die offenbarte Düse nicht geeignet, da hierfür pulverförmige Materialien mit einer kleinen Kornfraktion im vorgenannten Bereich zum Einsatz kommen. Da mittels des Micro-Cladding-Verfahrens u.a. Mikrostrukturen auch auf gekrümmten Oberflächen erzeugt werden können, besteht ein großes Interesse daran, eine verbesserte Düsentechnologie bereitzustellen.

Ausgehend von diesem Stand der Technik ist es eine Aufgabe der vorliegenden Erfindung, eine Düse für das Laser-Pulver-Auftragsschweißen anzugeben, die ausgebildet ist, um die Gefahr von Verstopfungen zu reduzieren.

Diese Aufgabe wird bei einer Düse der eingangs genannten Art dadurch gelöst, dass der Pulverkanal derart ausgebildet ist, dass der zwischen der radial äußeren Wandung des Pulverkanals und der Achse des Pulverkanals eingeschlossene Winkel zumindest in dem sich von der wenigstens einen Materialeintrittsöffnung bis zu der Materialaustrittsöffnung erstreckenden Bereich konstant ist oder in Richtung der Materialaustrittsöffnung abnimmt.

Die Durchführung von strömungstechnischen Simulationen (CFD-Simulationen - computational fluid dynamics) hat gezeigt, dass die erfindungsgemäße Ausgestaltung des Pulverkanals eine exzellente Förderbarkeit des pulverförmigen Materials gewährleistet. Die Förderbarkeit ist auch unter Verwendung von pulverförmigen Materialien mit vergleichsweise geringer Kornfraktion von einigen bis einigen zehn Mikrometern sehr gut. Daher können auch pulverförmige Materialien mit einer solchen Kornfraktion zum Einsatz kommen. Unter Verwendung der erfindungsgemäßen Düse ist daher gegenüber dem Stand der Technik ein aufwendiges Sieben des zum Einsatz kommenden pulverförmigen Materials nicht erforderlich. Die erfindungsgemäße Düse ist ferner besonders geeignet für den Einsatz im Rahmen des Micro-Cladding-Verfahrens. Darüber hinaus können, da Materialien mit einer geringeren Kornfraktion zum Einsatz kommen können, als bei den bekannten Düsen, neue Prozesse und Anwendungen erschlossen werden. Es können beispielsweise kleinere oder größere Auftragsraten realisiert werden und es kann die Schweißbarkeit von neuen Legierungen für das Micro-Cladding-Verfahren erschlossen werden.

Die konkrete Geometrie des Pulverkanals ermöglicht einen besonders störungsfreien Betrieb der Düse u.a. dadurch, dass die Bildung von Ablagerungen von pulverförmigem Material in dem Pulverkanal unterbunden wird. Dazu ist die radial äußere Wandung des Pulverkanals derart ausgestaltet, dass betrachtet von der wenigstens einen Materialeintrittsöffnung zur Materialaustrittsöffnung hin an keiner Stelle der radial äußeren Wandung der Winkel zwischen der Wandung und der Achse des Pulverkanals - gegenüber einer weiter oben liegenden Stelle - zunimmt, also an keiner Stelle eine Verringerung der Steigung vorliegt.

In Bereichen, in denen die Steigung von der Materialeintrittsöffnung zur Materialaustrittsöffnung hin betrachtet abnimmt, liegen nach außen weisende Vertiefungen in der Außenwandung vor. Es hat sich gezeigt, dass sich in diesen Vertiefungen, die "Totwassergebiete" in dem Strömungsprofil darstellen, pulverförmiges Material ablagert. Es können "Pulvertrauben" entstehen. Löst sich eine derartige "Pulvertraube" aus einer Vertiefung, so führt dies in der Regel zu einer Verstopfung des Pulverkanals und der Betrieb muss unterbrochen werden.

Insbesondere für den Fall, dass eine Düse für das Auftragsschweißen unter einem Anstellwinkel zum Einsatz kommt, also in einer Gegenüber der Vertikalen verkippten Position, begünstigt das Vorhandensein von Vertiefungen in der radial äußeren Wandung die Bildung von "Pulvertrauben" und hierdurch bedingte Verstopfungen des Pulverkanals. Dies ist darauf zurückzuführen, dass unter einem Anstellwinkel der zur Oberfläche des zu bearbeitenden Werkstücks weisende Bereich der äußeren Wandung des Pulverkanals in Richtung der Horizontalen verkippt ist und die auf die Partikel des pulverförmigen Materials wirkende Schwerkraft eine Sammlung und Ablagerung insbesondere in Vertiefungen in diesem Bereich begünstigt. Bei der Düse gemäß dem Stand der Technik ist eine nach außen gerichtete Vertiefung, in der es unter einem Anstellwinkel zu Ablagerungen des Materials kommt, insbesondere im Bereich der Einspritzkammer gegeben. Ein Betrieb der Düse gemäß dem Stand der Technik ist unter einem Anstellwinkel nicht möglich, da sich vor allem an dieser Stelle eine Materialansammlung bilden wird, die zu einer Verstopfung der Düse führen kann.

Die erfindungsgemäße Düse hingegen weist einen Pulverkanal mit einer radial äußeren Wandung auf, die für den Fall eines konstanten Winkels zwischen äußerer Wandung und Achse glatt ausgebildet ist und für den Fall eines zunehmenden Winkels zur Achse hin gewölbt ist bzw. für eine diskontinuierliche Winkelzunahme nach innen, also zur Achse gerichtete Wandungs-übergänge aufweist. In dem erfindungsgemäßen Pulverkanal sind folglich keine Vertiefungen, Ecken oder Kanten vorhanden, in bzw. an denen sich pulverförmiges Material ablagert.

Ist der Winkel zwischen der äußeren Wandung und der Achse des Pulverkanals über den sich der Materialeintrittsöffnung, insbesondere von der der Materialaustrittsöffnung zugewandten Kante der Materialeintrittsöffnung, bis zu der Materialaustrittsöffnung erstreckenden Bereich konstant, so weist die äußere Wandung in diesem Bereich die Form eines Kegelstumpfmantels auf. Der Winkel zwischen der äußeren Wandung und der Achse entspricht bei dieser Ausgestaltung dem halben Öffnungswinkel des Kegelstumpfes. Eine glatt ausgebildete radial äußere Wandung des Pulverkanals hat sich als besonders geeignet erwiesen, um Ablagerungen von pulverförmigem Material vorzubeugen.

Weist die radial äußere Wandung gekrümmte Bereiche auf, so ist der Winkel zwischen Wandung und der Achse des Pulverkanals durch den Winkel zwischen der Tangente an der jeweiligen gekrümmten Stelle und der Achse gegeben.

Die erfindungsgemäße Düse für das Auftragsschweißen kann - gegenüber den Düsen aus dem Stand der Technik - auch unter einem Anstellwinkel störungsfrei betrieben werden. Da ein Betrieb selbst unter großen Anstellwinkeln möglich ist, können mit der erfindungsgemäßen Düse problemlos 3-D-Strukturen erzeugt werden.

Damit der gesamte Pulverkanal von dem pulverförmigen Material durchströmt wird, ist die wenigstens eine Materialeintrittsöffnung vorzugsweise im hinteren Endbereich des Pulverkanals vorgesehen.

Die durch die offene vordere Stirnseite des Pulverkanals definierte ringförmige Materialaustrittsöffnung kann insbesondere die Laseraustrittsöffnung der Durchgangsöffnung einschließen.

Gemäß einer Ausführungsform der vorliegenden Erfindung ist vorgesehen, dass die Breite des Pulverkanals zumindest in dem sich von der wenigstens einen Materialeintrittsöffnung bis zu der Materialaustrittsöffnung erstreckenden Bereich in Richtung der Materialaustrittsöffnung abnimmt. Als Breite des Pulverkanals ist hier die durch die Differenz aus dem Radius der radial äußeren Wandung und dem Radius der radial inneren Wandung des Pulverkanals gegebene Größe bezeichnet. Dass die Breite zur Laseraustrittsöffnung hin abnimmt bedeutet demgemäß, dass die Differenz der vorgenannten Radien kleiner wird. Durch die Abnahme der Breite des Pulverkanals wird gewährleistet, dass die Geschwindigkeit des Förderfluids und des pulverförmigen Materials zur Materialaustrittsöffnung hin zunimmt. Durch diese Beschleunigung wird die Ablagerung von Material in dem Pulverkanal weiterhin vermieden.

Die vorstehend genannte Aufgabe wird alternativ oder zusätzlich dadurch gelöst, dass die Breite des Pulverkanals in dem sich von der wenigstens einen Materialeintrittsöffnung bis zu der Materialaustrittsöffnung erstreckenden Bereich in Richtung der Materialaustrittsöffnung kontinuierlich abnimmt. Die kontinuierliche Abnahme der Breite resultiert in eine kontinuierliche Beschleunigung des Förderfluids und des mit diesem vermischten pulverförmigem Materials, wodurch besonders zuverlässig vermieden wird, dass sich Material in dem Pulverkanal ablagert.

Gemäß einer weiteren Ausführungsform ist vorgesehen, dass der Pulverkanal in dem sich von der wenigstens einen Materialeintrittsöffnung bis zu der Materialaustrittsöffnung erstreckenden Bereich einen hinteren Teilabschnitt, in dem seine Breite stärker abnimmt, und einen vorderen Teilabschnitt, in dem seine Breite weniger stark abnimmt, umfasst. Diese Ausgestaltung ist besonders vorteilhaft, da der Pulverkanal im Bereich der Materialzufuhr, die in dem der Materialaustrittsöffnung abgewandten Bereich erfolgt, eine vergleichsweise große Breite aufweisen kann, die beispielsweise an die Dimensionen der Materialeintrittsöffnung angepasst ist, um ein ungehindertes, gleichmäßiges Einströmen des pulverförmigen Materials zu gewährleisten. In diesem Teilabschnitt findet insbesondere eine gleichmäßige Verteilung des Materials entlang der Umfangsrichtung des Pulverkanals statt. Durch die vergleichsweise starke Reduktion der Breite in diesem Teilabschnitt wird gewährleistet, dass die Breite über eine vergleichsweise kurze Strecke von der an die optimale Materialzufuhr angepassten Dimensionierung auf eine Dimensionierung gebracht wird, die einen guten, insbesondere ausreichend kleinen Materialfokus ermöglicht. Der sich an den Teilabschnitt starker Breitereduktion anschließend Teilabschnitt ist dann insbesondere (ring)spaltförmig ausgebildet, wobei die Breite nur noch in verringertem Maße zur Materialaustrittsöffnung hin abnimmt. Im Ergebnis wird ein besonders guter Materialfokus erhalten.

Insbesondere für das Micro-Cladding-Verfahren ist eine vergleichsweise geringe Breite der ringförmigen Materialaustrittsöffnung erforderlich, die beispielsweise nur wenige hundert Mikrometer betragen sollte, um einen für den Bearbeitungsprozess erforderlichen Materialfokus ausreichend geringen Durchmessers zu erhalten. Die Unterteilung des Pulverkanals gemäß dieser Ausführungsform ermöglicht das Erzielen eines für das Micro-Cladding-Verfahren ausreichend kleinen Fokus. Darüber hinaus ist der erhaltene Fokus auch besonders homogen.

Der Pulverkanal umfasst vorzugsweise zwei Teilabschnitte. Es ist aber selbstverständlich auch möglich, dass der Pulverkanal weitere Teilabschnitte aufweist.

Bei dieser Ausführungsform kann ferner vorgesehen sein, dass die radial innere Wandung des Pulverkanals in dem hinteren und dem vorderen Teilabschnitt jeweils die Form eines Kegelstumpfmantels aufweist und insbesondere der hintere Teilabschnitt einen geringeren Kegelstumpf-Öffnungswinkel hat als der vordere Teilabschnitt. Durch die Unterteilung der radial inneren Wandung des Pulverkanals in zwei kegelstumpfförmige Teilabschnitte mit unterschiedlichen Öffnungswinkeln kann auf besonders einfache konstruktive Weise ein Pulverkanal mit einem Teilabschnitt stärkerer und einem Teilabschnitt weniger starker Abnahme der Breite in Richtung der Laseraustrittsöffnung erhalten werden. Die Winkeländerung im Übergangspunkt der beiden Teilabschnitte liegt dabei vorzugsweise in der Größenordnung einiger weniger Grad, insbesondere im Bereich von 0,5 bis 3°.

Der vordere Teilabschnitt kann sich dabei vorzugsweise unmittelbar an den hinteren Teilabschnitt anschließen und es können sich insbesondere der vordere und der hintere Teilabschnitt jeweils über etwa die Hälfte des sich von der wenigstens einen Materialeintrittsöffnung bis zu der Materialaustrittsöffnung erstreckenden Bereichs des Pulverkanals erstrecken, was sich als besonders geeignete Aufteilung erwiesen hat.

In Weiterbildung der Erfindung ist vorgesehen, dass der hülsenförmigen Düsenkörper ein hülsenartiges Basiselement und ein in dem Basiselement positioniertes hülsenartiges Einsatzelement umfasst und die Durchgangsöffnung für den Bearbeitungslaserstrahl in dem Einsatzelement ausgebildet ist. Der Pulverkanal ist dann vorzugsweise zwischen dem Basiselement und dem Einsatzelement ausgebildet. Unter Verwendung eines hülsenartigen Basis- und Einsatzelementes kann auf einfache konstruktive Weise eine erfindungsgemäße Düse mit einem Pulverkanal für die Zufuhr pulverförmigen Materials erhalten werden. Die beiden hülsenartigen Bauteile lassen sich einfach fertigen und müssen nur ineinander gesetzt werden, um eine erfindungsgemäße Düse mit Pulverkanal zu erhalten.

In Weiterbildung der Erfindung ist vorgesehen, dass in dem Pulverkanal der Übergang zwischen der hinteren Stirnwandung und der radial äußeren Wandung abgerundet ausgebildet ist. Die abgerundete Form stellt eine Anpassung an den in der Regel kreisförmigen Strömungsquerschnitt des pulverförmigen Materials dar, welches vorzugsweise durch kreisrunde bzw. ovale Materialeintrittsöffnungen in den Pulverkanal einströmt. Würde der Pulverkanal insbesondere im Bereich der Materialzufuhr Ecken oder Kanten aufweisen, so kann das Strömungsprofil des einströmenden pulverförmigen Materials gestört werden, und es wird verhindert, dass sich über den Umfang des Pulverkanals eine gleichmäßige Verteilung des Materials einstellt. Die abgerundete Ausbildung des Pulverkanals gemäß dieser Ausführungsform gewährleistet folglich eine besonders gleichmäßige Verteilung des pulverförmigen Materials in Umfangsrichtung des Pulverkanals. Auf diese Weise wird ein besonders homogener Materialfokus erzielt.

In vorteilhafter Ausgestaltung der vorliegenden Erfindung kann vorgesehen sein, dass die wenigstens eine Materialeintrittsöffnung derart ausgebildet ist, dass pulverförmiges Material gegenüber einer senkrecht zu der Achse des Pulverkanals liegenden Ebene unter einem Winkel in Richtung der Materialaustrittsöffnung in den Pulverkanal eingebracht werden kann. Gemäß dieser Ausführungsform ist die Zuführrichtung des pulverförmigen Materials derart ausgerichtet, dass das Material eine Geschwindigkeitskomponente aufweist, die in Richtung des Pulverkanals von der Materialeintrittsöffnung zu der Materialaustrittsöffnung weist. Der Winkel gegenüber der senkrecht zur Achse des Pulverkanals liegenden Ebene beträgt vorzugsweise bis zu 30°.

Gemäß einer weiteren Ausführungsform ist die wenigstens eine Materialeintrittsöffnung derart ausgebildet ist, dass die zu der Einströmrichtung des durch die Materialeintrittsöffnung in den Pulverkanal einströmenden pulverförmigen Materials senkrechte Projektion der Eintrittsöffnung zumindest in etwa der Breite des Pulverkanals im Bereich der Materialeintrittsöffnung entspricht. Ist die Dimensionierung der Materialeintrittsöffnung und somit der Strömungsquerschnitt des einströmenden Materials auf diese Weise an die Dimensionierung des Pulverkanals im Bereich der Materialeintrittsöffnung angepasst, so kann das pulverförmige Material gleichmäßig und ungestört in den Pulverkanal einströmen. Läge die Breite des Pulverkanals an dieser Stelle beispielsweise unterhalb des Strömungsquerschnitts, so wäre eine die Strömung störende Verengung gegeben, was nachteilig ist. Die zu der Einströmrichtung des pulverförmigen Materials senkrechte Projektion der Eintrittsöffnung kann beispielsweise einen Durchmesser von einigen Millimetern, insbesondere einen Durchmesser im Bereich von 1 bis 3 mm aufweisen.

Eine weitere Ausführungsform der vorliegenden Erfindung zeichnet sich dadurch aus, dass die wenigstens eine Materialeintrittsöffnung derart ausgebildet ist, dass pulverförmiges Material mit einer in Umfangsrichtung des Pulverkanals weisenden Bewegungskomponente in den Pulverkanal eingebracht werden kann. Gemäß dieser Ausführungsform wird das pulverförmige Material nicht radial, sondern derart in dem Pulverkanal eingebracht, dass es eine in Umfangsrichtung des Pulverkanals weisende Bewegungskomponente aufweist. Diese Geometrie ist besonders vorteilhaft, da das pulverförmige Material nach Eintritt in den Pulverkanal nicht gegen die Innenwandung dieses "prallt", sondern ungehindert in Umfangsrichtung einströmt. Die Zufuhr von pulverförmigem Material kann dazu exakt tangential in den Pulverkanal erfolgen, oder unter einem Winkel gegenüber der Tangenten. Der Winkel kann dabei vorzugsweise bis zu 45° betragen.

Bei der Zufuhr des pulverförmigen Materials mit einer in Umfangsrichtung des Pulverkanals weisenden Bewegungskomponente stellt zunächst eine spiralförmige Strömung des pulverförmigen Materials ein und dieses kann sich besonders gleichmäßig über den Umfang des Pulverkanals verteilen. In Richtung der Materialaustrittsöffnung baut sich der Drall des pulverförmigen Materials nach und nach ab und das gleichmäßig verteilte Material weist in dem der Materialaustrittsöffnung zugewandten (End-)Bereich des Pulverkanals nur noch eine in Richtung der Materialaustrittsöffnung weisende Bewegungskomponente auf, wodurch ein Materialfokus mit guten Eigenschaften, insbesondere guter Homogenität erhalten wird. Für den Fall der Pulverzufuhr mit einer Bewegungskomponente in Umfangsrichtung des Pulverkanals ist es besonders vorteilhaft, wenn der Pulverkanal in einen Teilabschnitt stärkerer Abnahme der Breite und einen Teilabschnitt geringerer Abnahme der Breite unterteilt ist. Das pulverförmige Material wird dann in den ersten Teilabschnitt eingebracht und kann sich in diesem spiralförmig ausbreiten und seinen Drall abbauen, wobei eine besonders gleichmäße Verteilung in Umfangsrichtung erzielt wird. Bei Eintritt in den Teilabschnitt geringerer Breite und geringerer Abnahme der Breite weist das Material dann lediglich eine Bewegungskomponente in Richtung der Materialaustrittsöffnung auf, was für gute Materialfokuseigenschaften sorgt.

Gemäß einer weiteren Ausführungsform der vorliegenden Erfindung sind in dem Pulverkanal mehrere Materialeintrittsöffnungen vorgesehen. Durch die Pulverzufuhr an mehreren Stellen wird ein in Umfangsrichtung des Pulverkanals besonders gleichmäßige Verteilung pulverförmigen Materials erzielt. Dabei sind die Materialeintrittsöffnungen vorzugsweise in Umfangsrichtung des Pulverkanals äquidistant beabstandet und/oder in gleicher Höhe vorgesehen.

Weitere Merkmale und Vorteile der vorliegenden Erfindung werden nachfolgend anhand der Beschreibung einer Ausführungsform unter Bezugnahme auf die beiliegende Zeichnung deutlich. In der Zeichnung zeigt:
- Figur 1: eine erfindungsgemäße Düse für das Laserpulverauftragsschweißen in der Außenansicht;
- Figur 2: einen Längsschnitt entlang der Linie I-I der in Figur 1 dargestellten Düse; und
- Figur 3: einen Horizontalschnitt durch die in den Figuren 1 und 2 dargestellte Düse.

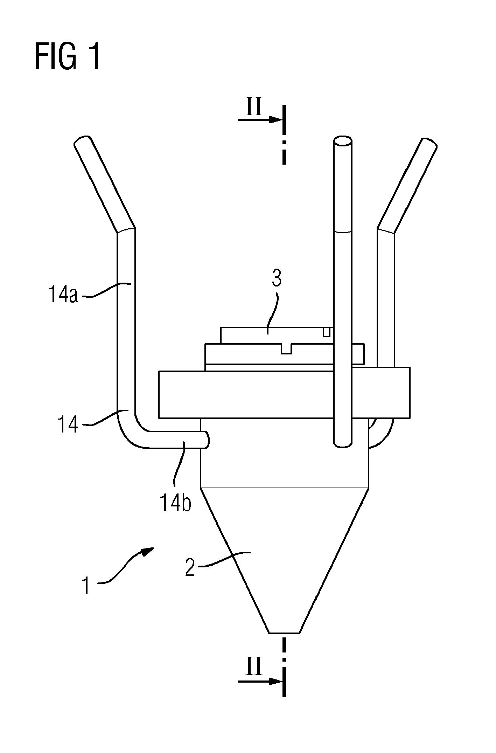

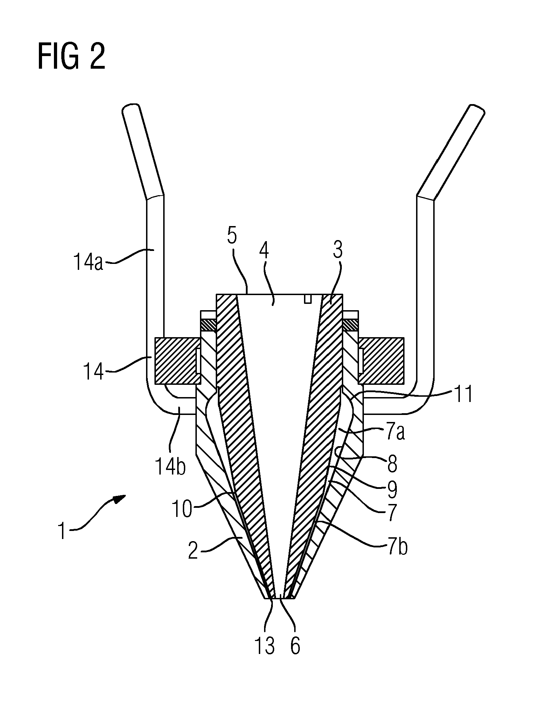

Die Figur 1 zeigt eine erfindungsgemäße Düse für das Laser-pulver-Auftragsschweißen in der Außenansicht. Diese umfasst, wie aus der Schnittdarstellung aus Figur 2 gut entnommen werden kann, einen hülsenförmigen Düsenkörper 1. Der hülsenförmige Düsenkörper 1 weist ein hülsenartig ausgebildetes Basiselement 2 sowie ein ebenfalls hülsenartig ausgebildetes Einsatzelement 3 auf, welches in dem Basiselement 2 positioniert ist. Das Einsatzelement 3 ist hier in das Basiselement 2 eingeschraubt. In dem Einsatzelement 3 ist eine axiale Durchgangsöffnung 4 für einen in der Figur nicht dargestellten Bearbeitungslaserstrahl vorgesehen, welche sich zu der in der Figur nach unten weisenden Vorderseite des Düsenkörpers 1 hin verjüngt. Die Durchgangsöffnung 4 weist an ihrer Rückseite eine Lasereintrittsöffnung 5 sowie an ihrer Vorderseite eine Laseraustrittsöffnung 6 auf. Durch die Durchgangsöffnung 4 kann der Bearbeitungslaserstrahl auf einen Bearbeitungsbereich vor der Laseraustrittsöffnung 6 gerichtet werden.

Zwischen dem Basiselement 2 und dem Einsatzelement 3 des Düsenkörpers 1 ist ein sich koaxial zu der Durchgangsöffnung 4 erstreckender ringförmiger Pulverkanal 7 für die Zufuhr eines pulverförmigen Materials in den Bearbeitungsbereich ausgebildet. Der Pulverkanal 7 umgibt die Durchgangsöffnung 4 über etwa 2/3 deren axialer Länge und verjüngt sich zur Vorderseite des Düsenkörpers 1 hin.

Der Pulverkanal 7 hat eine radial äußere Wandung 8, welche die Form eines Kegelstumpfmantels aufweist, d.h., dass sich die radial äußere Wandung 8 konisch zur Vorderseite des Düsenkörpers 1 hin verjüngt. Die Breite des Pulverkanals 7 nimmt ferner zu der Laseraustrittsöffnung 6 hin ab, wobei der Pulverkanal 7 in einen hinteren Teilabschnitt 7a, in dem die Breite stärker abnimmt und einen vorderen Teilabschnitt 7b, in welchem die Breite weniger stark abnimmt, unterteilt ist. Konstruktiv ist diese Unterteilung des Pulverkanals 7 in einen Teilabschnitt stärkerer und einen Teilabschnitt weniger starker Breitereduktion umgesetzt, indem die radial innere Wandung 9 des Pulverkanals 7 in dem hinteren Teilabschnitt 7a und dem vorderen Teilabschnitt 7b jeweils die Form eines Kegelstumpfmantels aufweist, sich also nach vorne hin konisch verjüngt, wobei die radial innere Wandung 9 im hinteren Teilabschnitt 7a einen geringeren Kegelstumpf-Öffnungswinkel hat als im vorderen Teilabschnitt 7b.

Der Öffnungswinkel der kegelstumpfmantelförmigen radial äußeren Wandung 8 beträgt 35°. Der Öffnungswinkel der radial inneren Wandung 9 beträgt im hinteren Teilabschnitt 7a des Pulverkanals 7 24,2° und im vorderen Teilabschnitt 7b 33°.

Der vordere Teilabschnitt 7b schließt sich ferner unmittelbar an den hinteren Teilabschnitt 7a an. Der hintere Teilabschnitt 7a geht in den vorderen Teilabschnitt 7b an einer kreisförmigen Kante 10 in der radial inneren Wandung 9 des Pulverkanals 7 über. Die Teilabschnitte 7a und 7b erstrecken sich jeweils über etwa die Hälfte der Länge des Pulverkanals 7.

Der Pulverkanal 7 ist an seiner hinteren Stirnseite 11 geschlossen ausgebildet. Der Übergang zwischen der hinteren Stirnwandung und der radial äußeren Wandung 8 ist ferner abgerundet ausgebildet. Die Breite des Pulverkanals 7 beträgt in seinem hinteren Endbereich etwa 3 mm.

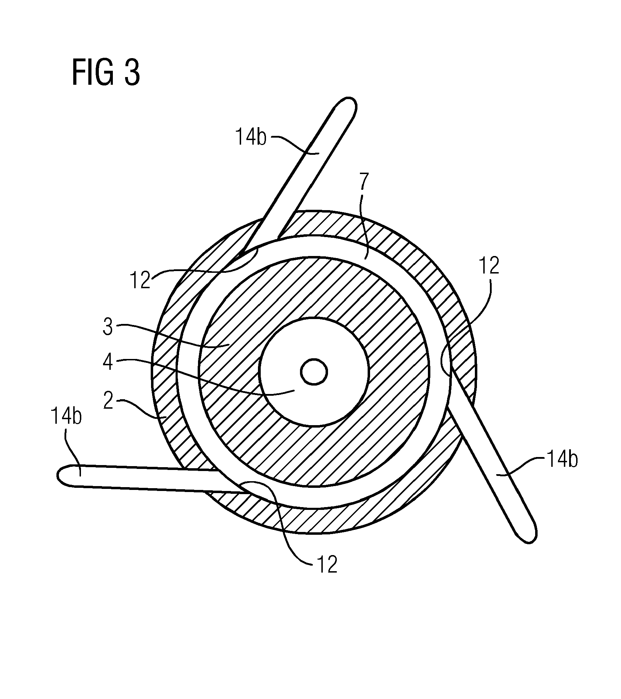

In dem geschlossenen hinteren Endbereich des Pulverkanals 7 sind, wie in der Schnittdarstellung in Figur 3 gut zu erkennen ist, insgesamt drei Materialeintrittsöffnungen 12 in Umfangsrichtung des Pulverkanals 7 äquidistant beabstandet sowie in gleicher Höhe vorgesehen. Durch die Materialeintrittsöffnungen 12 kann pulverförmiges Material in den Pulverkanal 7 einströmen. Das pulverförmige Material kann, nachdem es den Pulverkanal 7 durchströmt hat, durch die von der offen ausgebildeten vorderen Stirnseite des Pulverkanals 7 definierte ringförmige Materialaustrittsöffnung 13 aus dem Pulverkanal 7 austreten. Die ringförmige Materialaustrittsöffnung 13 schließt die kreisförmige Laseraustrittsöffnung 6 der Durchgangsöffnung 4 ein. Der Pulverkanal 7 weist im Bereich der Materialaustrittsöffnung eine Breite von etwa 250 µm auf.

Die im hinteren Endbereich des Pulverkanals 7 vorgesehenen Materialeintrittsöffnungen 12 sind derart ausgebildet, dass pulverförmiges Material mit einer Bewegungskomponente in Umfangsrichtung des Pulverkanals 7 in diesen eingebracht werden kann. Für die Zufuhr des pulverförmigen Materials sind drei Zuführleitungen 14 vorgesehen, die jeweils über die Materialeintrittsöffnungen 12 in den Pulverkanal 7 münden und einen runden Querschnitt aufweisen.

Die Zuführleitungen 14 umfassen, wie in Figur 2 gut erkennbar, jeweils einen vertikalen Teilabschnitt 14a sowie einen horizontalen Teilabschnitt 14b, dessen Endbereich in den Pulverkanal 7 mündet. Wie ebenfalls in Figur 3 gut erkennbar, münden die horizontalen Teilabschnitte 14b der Zuführleitungen 14 derart in den oberen Endbereich des Pulverkanals 7, dass sie mit der Tangenten an den Pulverkanal 7 an ihrem Einmündungspunkt einen Winkel von etwa 35° einschließen. Der innere Durchmesser der Zuführleitungen 14 beträgt etwa 2 mm und liegt somit knapp unterhalb der Breite des Pulverkanals 7 in diesem Bereich. Infolge der nicht radialen Orientierung der Zuführleitungen 14 und deren rundem Querschnitt weisen die Materialeintrittsöffnungen 12 eine im Wesentlichen ovale Form auf.

Im Betrieb wird über die Zuführleitungen 14 mit einem Förderfluid, hier Argon, vermischtes pulverförmiges Material auf Nickelbasis, welches eine Kornfraktion von 25 bis 50 Mikrometer aufweist durch die drei Materialeintrittsöffnungen 12 mit einer Bewegungskomponente in Umfangsrichtung des Pulverkanals 7 in den hinteren Endbereich des Pulverkanals 7 eingebracht. Der Volumenstrom von pulverförmigem Material beträgt insgesamt, also für die Summe der drei Teilströme, etwa 10⁻⁴ m³/s. Die kinematische Viskosität von Argon beträgt bei Raumtemperatur etwa 1,278*10⁻⁵ m²/s.

Da der Pulverkanal 7 in seinem hinteren Endbereich abgerundet ausgebildet ist, kann das pulverförmige Material, welches über die Zuführleitungen 14 in den Pulverkanal 7 geleitet wird, ungehindert und gleichmäßig in den hinteren Endbereich des Pulverkanals 7 einströmen. Infolge der Zufuhr mit einer Bewegungskomponente in Umfangsrichtung des Pulverkanals 7 und der Einwirkung der Gravitationskraft stellt sich in dem hinteren Teilabschnitt 7a des Pulverkanals 7, welcher einen Strömungsabschnitt bildet, eine spiralförmige Strömungsgeometrie ein. Es bilden sich praktisch drei jeweils von einer Materialeintrittsöffnung beginnende ineinander greifende Spiralen aus pulverförmigem Material. Auf diese Weise kann eine besonders gleichmäßige Verteilung des pulverförmigen Materials in Umfangsrichtung des Pulverkanals 7 erzielt werden. Der Drall des pulverförmigen Materials baut sich über den hinteren Teilabschnitt 7a des Pulverkanals 7 in Richtung der Materialaustrittsöffnung 13 nach und nach ab. Aufgrund der abnehmenden Geschwindigkeit des Pulvers und der abnehmenden Breite des Pulverkanals 7 sinkt die Reynolds-Zahl entlang des Pulverkanals 7. Das pulverförmige Material weist bei Eintritt in den vorderen Teilabschnitt 7b, welcher spaltartig ausgebildet ist, nur noch eine in Richtung der Materialaustrittsöffnung 13 gerichtet Geschwindigkeitskomponente auf.

Das pulverförmige Material tritt an der Vorderseite des Düsenkörpers 1 über die ringförmige Materialaustrittsöffnung 13 aus dem Pulverkanal 7 aus und wird infolge der sich nach vorne konisch verjüngenden Form des Pulverkanals 7 auf einen Punkt vor der Materialaustrittsöffnung 13 gebündelt, den sogenannten Materialfokus. Infolge der besonders gleichmäßigen Verteilung des pulverförmigen Materials über den Umfang des Pulverkanals 7 in dem hinteren Teilabschnitt 7a und der anschließend allein in Richtung der Materialaustrittsöffnung 13 gerichteten Bewegung des Materials in dem vorderen Teilabschnitt 7b zeichnet sich der Materialfokus durch eine besonders gute Homogenität aus.

Das pulverförmige Material wird in dem Bearbeitungsbereich mittels des sich simultan durch die Durchgangsöffnung 4 durch den Düsenkörper 1 ausbreitenden Bearbeitungslaserstrahls auf die Oberfläche eines vor der Laseraustrittsöffnung 6 und der Materialaustrittsöffnung 13 befindlichen Werkstücks, welches in der Figur nicht dargestellt ist, aufgeschweißt.

Infolge der erfindungsgemäßen Ausgestaltung des Pulverkanals 7 wird während des Betriebs ein Verstopfen der Düse verhindert. Insbesondere kommt es zu keinen Ablagerungen von pulverförmigem Material in dem Pulverkanal 7. Dabei kann die erfindungsgemäße Düse sowohl senkrecht, als auch unter einem kleinen oder großen Anstellwinkel betrieben werden, ohne dass ihre Funktionsfähigkeit hierdurch eingeschränkt wäre. Im Ergebnis können unter Verwendung der erfindungsgemäßen Düse auch 3-D-Strukturen problemlos erzeugt werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Düse für das Laser-Pulver-Auftragsschweißen, umfassend einen hülsenförmigen Düsenkörper (1), in dem eine axiale Durchgangsöffnung (4) für einen Bearbeitungslaserstrahl mit einer Lasereintrittsöffnung (5) an ihrer Hinterseite und einer Laseraustrittsöffnung (6) an ihrer Vorderseite ausgebildet ist,
wobei sich die Durchgangsöffnung (4) insbesondere in Richtung der Laseraustrittsöffnung (6) verjüngt, und einen die Durchgangsöffnung (4) zumindest über einen Teil ihrer axialen Länge umgebenden und sich koaxial zu dieser erstreckenden ringförmigen Pulverkanal (7) für die Zufuhr pulverförmigen Materials in einen Bearbeitungsbereich vor der Laseraustrittsöffnung (6), der wenigstens eine Materialeintrittsöffnung (12) in seiner radial äußeren Wandung (8) und eine durch die offene vordere Stirnseite des Pulverkanals (7) definierte Materialaustrittsöffnung (13) aufweist, und sich nach vorne hin verjüngt,
**dadurch gekennzeichnet, dass**
der Pulverkanal (7) derart ausgebildet ist, dass der zwischen der radial äußeren Wandung (8) des Pulverkanals (7) und der Achse des Pulverkanals (7) eingeschlossene Winkel zumindest in dem sich von der wenigstens einen Materialeintrittsöffnung (12) bis zu der Materialaustrittsöffnung (13) erstreckenden Bereich konstant ist oder in Richtung der Materialaustrittsöffnung (6) abnimmt.

2. Düse nach Anspruch 1,
**dadurch gekennzeichnet, dass**
die Breite des Pulverkanals (7) zumindest in dem sich von der wenigstens einen Materialeintrittsöffnung (12) bis zu der Materialaustrittsöffnung (13) erstreckenden Bereich in Richtung der Materialaustrittsöffnung (6) abnimmt.

3. Düse für das Laser-Pulver-Auftragsschweißen, insbesondere nach Anspruch 2,
umfassend einen hülsenförmigen Düsenkörper (1), in dem eine axiale Durchgangsöffnung (4) für einen Bearbeitungslaserstrahl mit einer Lasereintrittsöffnung (5) an ihrer Hinterseite und einer Laseraustrittsöffnung (6) an ihrer Vorderseite ausgebildet ist,
wobei sich die Durchgangsöffnung (4) insbesondere in Richtung der Laseraustrittsöffnung (6) verjüngt, und einen die Durchgangsöffnung (4) zumindest über einen Teil ihrer axialen Länge umgebenden und sich koaxial zu dieser erstreckenden ringförmigen Pulverkanal (7) für die Zufuhr pulverförmigen Materials in einen Bearbeitungsbereich vor der Laseraustrittsöffnung (6), der wenigstens eine Materialeintrittsöffnung (12) in seiner radial äußeren Wandung (8) und eine durch die offene vordere Stirnseite des Pulverkanals (7) definierte Materialaustrittsöffnung (13) aufweist, und sich nach vorne hin verjüngt,
**dadurch gekennzeichnet, dass**
die Breite des Pulverkanals (7) in dem sich von der wenigstens einen Materialeintrittsöffnung (12) bis zu der Materialaustrittsöffnung (13) erstreckenden Bereich in Richtung der Materialaustrittsöffnung (13) kontinuierlich abnimmt.

4. Düse nach Anspruch 2 oder 3,
**dadurch gekennzeichnet, dass**
der Pulverkanal (7) in dem sich von der wenigstens einen Materialeintrittsöffnung (12) bis zu der Materialaustrittsöffnung (13) erstreckenden Bereich einen hinteren Teilabschnitt (7a), in dem seine Breite stärker abnimmt, und einen vorderen Teilabschnitt (7b), in dem seine Breite weniger stark abnimmt, umfasst.

5. Düse nach Anspruch 4,
**dadurch gekennzeichnet, dass**
die radial innere Wandung (9) des Pulverkanals (7) in dem hinteren und dem vorderen Teilabschnitt (7a, 7b) jeweils die Form eines Kegelstumpfmantels aufweist und insbesondere der hintere Teilabschnitt (7a) einen geringeren Kegelstumpf- Öffnungswinkel hat als der vordere Teilabschnitt (7b).

6. Düse nach Anspruch 5,
**dadurch gekennzeichnet, dass**
sich der vordere Teilabschnitt (7b) unmittelbar an den hinteren Teilabschnitt (7a) anschließt und sich insbesondere der vordere und der hintere Teilabschnitt (7b, 7a) jeweils über etwa die Hälfte des sich von der wenigstens einen Materialeintrittsöffnung (12) bis zu der Materialaustrittsöffnung (13) erstreckenden Bereichs des Pulverkanals (7) erstrecken.

7. Düse nach einem der vorhergehenden Ansprüche,
**dadurch gekennzeichnet, dass**
der hülsenförmigen Düsenkörper (1) ein hülsenartiges Basiselement (2) und ein in dem Basiselement positioniertes hülsenartiges Einsatzelement (3) umfasst und die Durchgangsöffnung (4) für den Bearbeitungslaserstrahl in dem Einsatzelement (3) ausgebildet ist.

8. Düse nach Anspruch 7,
**dadurch gekennzeichnet,**
**dass** der Pulverkanal (7) zwischen dem Basiselement (2) und dem Einsatzelement (3) ausgebildet ist.

9. Düse nach einem der vorhergehenden Ansprüche,
**dadurch gekennzeichnet, dass**
in dem Pulverkanal (7) der Übergang zwischen der hinteren Stirnwandung und der radial äußeren Wandung (8) abgerundet ausgebildet ist.

10. Düse nach einem der vorhergehenden Ansprüche,
**dadurch gekennzeichnet, dass**
die wenigstens eine Materialeintrittsöffnung (12) derart ausgebildet ist, dass pulverförmiges Material gegenüber einer senkrecht zu der Achse des Pulverkanals (7) liegenden Ebene unter einem Winkel in Richtung der Materialaustrittsöffnung (13) in den Pulverkanal (7) eingebracht werden kann.

11. Düse nach einem der vorhergehenden Ansprüche,
**dadurch gekennzeichnet, dass**
die wenigstens eine Materialeintrittsöffnung (12) derart ausgebildet ist, dass die zu der Einströmrichtung des durch die Materialeintrittsöffnung (12) in den Pulverkanal (7) einströmenden pulverförmigen Materials senkrechte Projektion der Materialeintrittsöffnung (12) zumindest in etwa der Breite des Pulverkanals (7) im Bereich der Materialeintrittsöffnung (12) entspricht.

12. Düse nach einem der vorhergehenden Ansprüche,
**dadurch gekennzeichnet, dass**
die wenigstens eine Materialeintrittsöffnung (12) derart ausgebildet ist, dass pulverförmiges Material mit einer in Umfangsrichtung des Pulverkanals (7) weisenden Bewegungskomponente in den Pulverkanal (7) eingebracht werden kann.

13. Düse nach einem der vorhergehenden Ansprüche,
**dadurch gekennzeichnet, dass**
in dem Pulverkanal (7) mehrere Materialeintrittsöffnungen (12) vorgesehen sind.

14. Düse nach Anspruch 13,
**dadurch gekennzeichnet, dass**
die Materialeintrittsöffnungen (12) in Umfangsrichtung des Pulverkanals (7) äquidistant beabstandet und/oder in gleicher Höhe vorgesehen sind.
